# EUROPÄISCHE PATENTSCHRIFT

(11) **EP 1 199 147 B1**
(45) Veröffentlichungstag und Bekanntmachung des Hinweises auf die Patenterteilung: **08.09.2004**
(21) Anmeldenummer: 01119300.0
(22) Anmeldetag: 10.08.2001
(51) Int. Cl.: B29C 45/16

(54) **Etagenwerkzeug zum Spritzgiessen von Kunststoffteilen**
Stack mould for injection moulding of plastic objects
Moule à étages pour mouler par injection des objets en matière plastique

(30) Priorität: 16.10.2000 DE 20017737 U
(43) Veröffentlichungstag der Anmeldung: 24.04.2002
(73) Patentinhaber: Braun Formenbau GmbH, 79353 Bahlingen (DE)
(72) Erfinder: Klaus Bühler, D-79353 Bahlingen (DE)
(74) Vertreter: Goy, Wolfgang, Dipl.-Phys.

(56) Entgegenhaltungen:
- WO-A-91/02640
- WO-A-98/38021
- DE-C- 4 328 853
- PATENT ABSTRACTS OF JAPAN vol. 1998, no. 5, 30. April 1998 (1998-04-30) -& JP 10 000647 A (MEIKI CO LTD), 6. Januar 1998 (1998-01-06)

## Beschreibung

Die Erfindung betrifft ein Etagenwerkzeug zum Spritzgießen von Kunststoffteilen nach dem Oberbegriff des Anspruchs 1.

Bei den Etagenwerkzeugen besteht das Grundprinzip darin, daß drei Werkzeugteile in Reihe hintereinander verschiebbar angeordnet sind. Dabei ist ein mittleres Werkzeugteil in Form eines Mittelblockes vorgesehen, dem benachbart auf beiden Seiten jeweils ein äußeres Werkzeugteil zugeordnet ist. Die beiden Teilungsebenen zwischen dem mittleren Werkzeugteil und dem jeweiligen äußeren Werkzeugteil definieren die Formnester für die zu spritzenden Kunststoffteile. Der Vorteil dieser Etagenwerkzeuge besteht darin, daß man im Vergleich zu den Werkzeugen mit zwei Werkzeughälften insgesamt eine doppelt so große Spritzkapazität erhält. Nachteilig ist, daß die bekannten Etagenwerkzeuge nur zum Spritzen einer einzigen Komponente geeignet sind.

Die WO-A-98 38021 zeigt ein 2-Etagenwerkzeug der eingangs angegebenen Art, mittels dem mehr als 2 Komponenten gespritzt werden können. Dabei sind ein mittleres, nicht drehbares Werkzeugteil sowie zwei äußere Wendeteile vorgesehen. Nach dem Spritzen der ersten Komponente werden die Werkzeugteile auseinandergefahren und die beiden äußeren Wendeteile um 180° verschwenkt, um so die zweite Komponente zu spritzen.

Belm Werkzeug in der WO-A-91 02640 sind bei der Ausführungsform der Fig. 5 bis 12 ein mittleres Werkzeugteil sowie beidseits angeordnete äußere Werkzeugteile vorgesehen. Die beiden äußeren Werkzeugteile weisen jeweils ein Drehteil auf. Nach dem Spritzen der ersten Komponente fahren die entsprechenden Werkzeugteile auseinander, so daß anschließend das Drehteil zum Spritzen der zweiten Komponente gedreht werden kann. Dabei ist es auch möglich, sämtliche äußere Werkzeugteile synchron auseinanderfahren zu können.

Die JP-A-10 000 647 zeigt ein 2-Komponenten-Spritzgießwerkzeug, bei dem zwei Werkzeughälften öffen- und schließbar sind. In der einen Werkzeughälfte befindet sich ein Drehteller. Nach dem Spritzen der ersten Komponente wird dieser Drehteller um 180° zum Spritzen der zweiten Komponente gedreht.

Der Erfindung liegt die **Aufgabe** zugrunde, ein Etagenwerkzeug zum Spritzen von Kunststoffteilen der eingangs angegebenen Art mit einer verbesserten Verfahr- sowie Dreheinrichtung zu schaffen.

Die technische **Lösung** ist gekennzeichnet durch die Merkmale im Kennzeichen des Anspruchs 1.

Mit dem erfindungsgemäßen Etagenwerkzeug ist es möglich, Kunststoffteile mit mehreren Komponenten, insbesondere mit zwei Komponenten, zu spritzen. Die Grundidee besteht darin, die beiden äußeren Werkzeugteile als sogenannte Wendewerkzeuge auszubilden. So kann durch eine Drehung dieser äußeren Werkzeugteile um 180° ein Spritzen mit zwei Komponenten realisiert werden. Entsprechend können durch kleinere Drehschritte noch mehr Komponenten gespritzt werden. Bezüglich den herkömmlichen Mehrkomponentenwerkzeugen besteht der Vorteil des erfindungsgemäßen Etagenwerkzeugs darin, daß eine doppelte Spritzkapazität möglich ist. Dabei werden die äußeren Werkzeugteile nicht komplett gedreht, sondem es wird lediglich das Drehteil gedreht, während das zugeordnete Basisteil als Aufnahme, als Gegenlager sowie als Drehlager für das Drehteil dient. Dadurch ist eine technisch einfache Möglichkeit für die Anordnung der Drehteller geschaffen. Indem das nicht drehbare Basisteil auf Führungsstangen verschiebbar ist, wird die Anordnung und Funktionsweise des Drehteils nicht von dem Verschiebemechanismus beeinflußt. Insbesondere gewähren die Führungsstangen, daß die Werkzeugteile präzise verschoben werden können. Dabei sind die Drehteile der beiden äußeren Werkzeugteile synchron drehbar, wobei die Synchronbewegung mit der Verfahrbewegung der Werkzeugteile gekoppelt ist.

Die Weiterbildung gemäß Anspruch 2 schafft eine technisch einfache Möglichkeit, um die äußeren Werkzeugteile in eine Drehbewegung zu versetzen. Dabei kann ein gemeinsamer Antrieb vorgesehen sein.

Die Weiterbildung gemäß Anspruch 3 schlägt die Anwendung des Etagenwerkzeugs bei einer Innenanspritzung vor, wonach die Entformung der Spritzlinge über eine düsenseitige Abstreifplatte des mittleren Werkzeugteils erfolgt.

Alternativ hierzu geht die Weiterbildung gemäß Anspruch 4 von einer Außenanspritzung aus, wobei die Entfernung der Spritzlinge über Abstreifplatten der äußeren Werkzeugteile erfolgt. Somit sind die Abstreifplatten mit den Drehtellem gekoppelt.

Die Weiterbildung gemäß Anspruch 5 schließlich schlägt vor, daß mehr als drei Werkzeugteile hintereinander angeordnet sind. Die Grundidee besteht darin, nicht nur - wie zuvor beschrieben - zwei Trennebenen für eine doppelte Kapazität, sondern drei Trennebenen für eine dreifache Kapazität etc. vorzusehen. Dies bedeutet in der technischen Realisierung, daß die zwischen den beiden äußeren Werkzeugteilen angeordneten mittleren Werkzeugteile jeweils beidseitig mit Formnestern ausgestattet sind.

Zwei Ausführungsbeispiele eines erfindungsgemäßen Etagenwerkzeugs zum Spritzen von Kunststoffteilen wird nachfolgend anhand der Zeichnungen beschrieben. In diesen zeigt:
- Fig. 1a: eine erste Ausführungsform des Etagenwerkzeugs für eine Innenanspritzung in einer Seitenansicht;
- Fig. 1b: eine Stirnansicht der äußeren Werkzeughälfte;
- Fig. 2a: eine zweite Ausführungsform des Etagenwerkzeugs für eine Außenanspritzung in einer Seitenansicht;
- Fig. 2b: eine Stirnansicht der äußeren Werkzeughälfte.

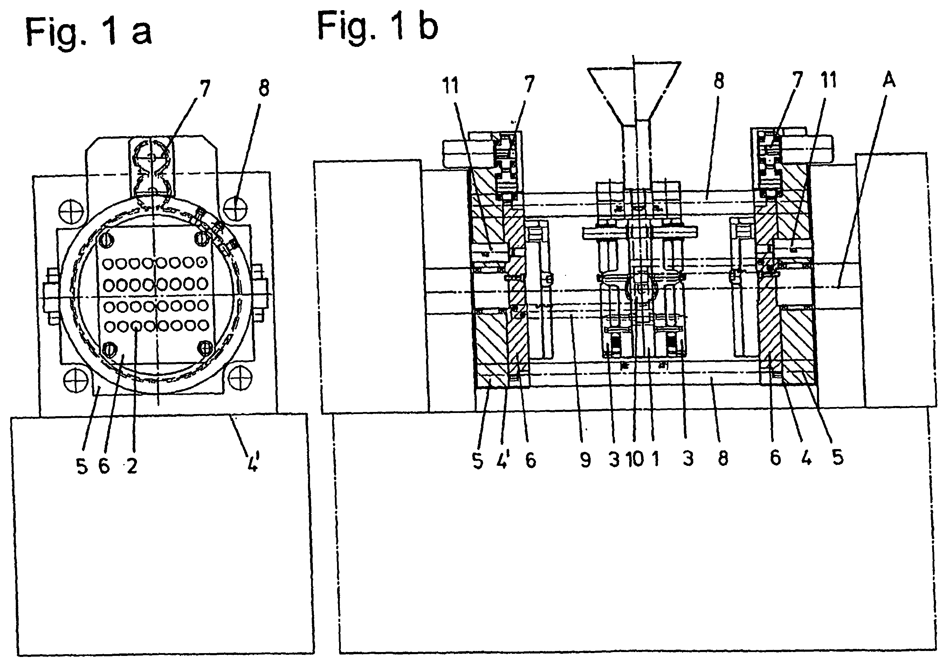

Das Etagenwerkzeug für eine Innenanspritzung der Fig. 1a und 1 b weist ein mittleres Werkzeugteil 1 auf. Auf beiden Seiten dieses mittleren Werkzeugteils 1 sind Formnester 2 ausgebildet. Außerdem weisen diese beiden Seiten des mittleren Werkzeugteils 1 jeweils eine Abstreifplatte 3 auf.

Beidseits des mittleren Werkzeugteils 1 befinden sich zwei äußere Werkzeugteile 4, 4'. Sie bestehen jeweils aus einem Basisteil 5 sowie aus einem Drehteil 6. Das Drehteil 6 ist dabei um eine Drehachse A drehbar gelagert. Der Antrieb des Drehteils 6 erfolgt über ein Zahnradgetriebe 7. Das äußere Werkzeugteil 4', nämlich dessen Basisteil 5, sowie das mittlere Werkzeugteil 1 sind auf Führungsstangen 8 verschiebbar gelagert. Das äußere Werkzeugteil 4 ist feststehend.

Die Funktionsweise ist wie folgt:

Für den Spritzvorgang sind die drei Werkzeugteile 1, 4, 4' zusammengefahren, so daß in den dazwischen ausgebildeten Formnestem 2 der Kunststoff eingespritzt werden kann. Die Darstellung in Fig. 1b zeigt das Auseinanderfahren der Werkzeugteile 1, 4, 4' nach dem Spritzen der ersten Komponente. Die Einrichtung zum Auseinanderfahren der Werkzeugteile 1, 4, 4' besteht im vorliegenden Ausführungsbeispiel aus einer am linken Werkzeugteil 4' angeordneten Zahnstange 9, welches mit einem Zahnrad 10 des mittleren Werkzeugteils 1 kämmt. Konkret sieht das Auseinanderfahren der Werkzeugteile 1, 4, 4' derart aus, daß das linke äußere Werkzeugteil 4' mittels eines nicht dargestellten Antriebs in der Zeichnung nach links verschoben wird. Durch die Zahnstange 9 wird über das Zahnrad 10 die Bewegung derart auf das mittlere Werkzeugteil 1 übertragen, daß dieses etwa mit der halben Wegläₙge nach links verfahren wird. Das rechte äußere Werkzeugteil 4 ist feststehend.

Nachdem die drei Werkzeugteile 1, 4, 4' auseinandergefahren worden sind, können die beiden Drehteile 6 der äußeren Werkzeugteile 4, 4' über das Zahnradgetriebe 7 synchron um 180° gedreht werden, nachdem sie zuvor mittels eines Hubzylinders 11 etwas ausgefahren worden sind. Anschließend werden die Drehteile 6 wieder zurückgefahren und schließlich alle drei Werkzeugteile 1, 4, 4' zusammengefahren, so daß die nächste Komponente gespritzt werden kann. Nach dem Spritzen der zweiten Komponente können dann nach Öffnen der Werkzeugteile 1, 4, 4' die Spritzlinge mittels der Abstreifplatte 3 ausgestoßen werden.

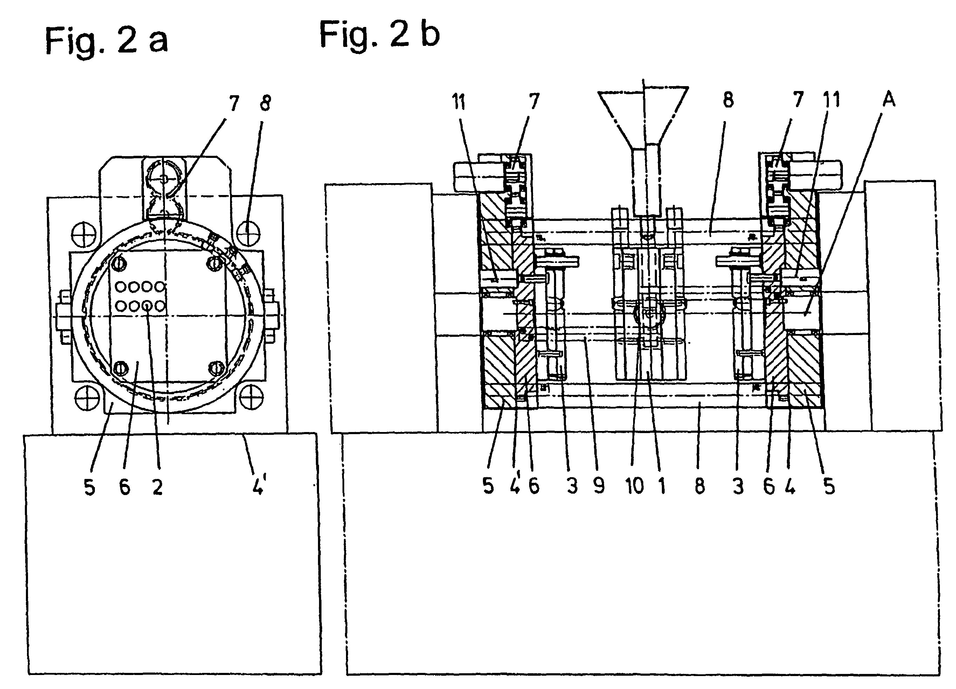

Die Ausführungsform der Fig. 2a und 2b unterscheidet sich von der ersten Ausführungsform der Fig. 1a und 1b dadurch, daß hier eine Außenanspritzung vorgesehen ist. Die Abstreifplatten 3 sind dabei den äußeren Werkzeugteilen 4, 4' zugeordnet. Die Funktionsweise dieser zweiten Ausführungsform entspricht vom Grundprinzip her der ersten Ausführungsform.

### Bezugszeichenliste

- 1: mittleres Werkzeugteil
- 2: Formnest
- 3: Abstreifplatte
- 4, 4': äußeres Werkzeugteil
- 5: Basisteil
- 6: Drehteil
- 7: Zahnradgetriebe
- 8: Führungsstange
- 9: Zahnstange
- 10: Zahnrad
- 11: Hubzylinder

- A: Drehachse

## Patentansprüche

1. Etagenwerkzeug zum Spritzen von Kunststoffteilen
mit einem mittleren Werkzeugteil (1) sowie
mit zwei hierzu benachbarten, äußeren sowie jeweils um eine zur Verfahrrichtung parallele Drehachse (A) drehbaren Werkzeugteilen (4, 4'),
wobei die Werkzeugteile (4, 4') aufeinander zu sowie voneinander weg verfahrbar sind und
wobei zwischen dem mittleren Werkzeugteil (1) und den beiden äußeren Werkzeugteilen (4, 4') in den jeweiligen Teilungsebenen die Formnester (2) ausgebildet sind,
**dadurch gekennzeichnet,**
**daß** die äußeren Werkzeugteile (4, 4') jeweils aus einem nicht drehbaren, auf Führungsstangen (8) verschiebbaren Basisteil (5) sowie aus einem dazu drehbaren Drehteil (6) bestehen und
**daß** die beiden Drehteile der äußeren Werkzeugteile (4, 4') synchron drehbar sind.

2. Etagenwerkzeug nach dem vorhergehenden Anspruch,
**dadurch gekennzeichnet,**
**daß** zum Drehen der äußeren Werkzeugteile (4, 4') ein außen angreifendes Zahnradgetriebe (7) vorgesehen ist.

3. Etagenwerkzeug nach Anspruch 1 oder 2,
**dadurch gekennzeichnet,**
**daß** eine düsenseitige Abstreifplatte (3) des mittleren Werkzeugteils (1) zur Entformung der Spritzlinge vorgesehen ist.

4. Etagenwerkzeug nach Anspruch 1 oder 2,
**dadurch gekennzeichnet,**
**daß** Abstreifplatten (3) der äußeren Werkzeugteile (4, 4') zur Entformung der Spritzlinge vorgesehen sind.

5. Etagenwerkzeug nach einem der vorhergehenden Ansprüche,
**dadurch gekennzeichnet,**
**daß** mehr als drei Werkzeugteile (1, 4, 4') hintereinander angeordnet sind.

## Claims

1. Stack mould for the injection moulding of plastics material parts comprising a central mould part (1) and two outer mould parts (4, 4') which are adjacent to this and can be rotated, in each case, about an axis of rotation (A) which is parallel to the direction of travel, the mould parts (4, 4') being movable towards one another and away from one another and wherein the mould cavities (2) are formed between the central mould part (1) and the two outer mould parts (4, 4') in the respective division planes, **characterised in that** the outer mould parts (4, 4') each consist of a non-rotatable base part (5) which can be displaced on guide rods (8) and a rotary part (6) which can be rotated with respect thereto, and **in that** the two rotary parts of the outer mould parts (4, 4') can be rotated synchronously.

2. Stack mould according to the preceding claim, **characterised in that** a toothed gearing (7) which engages externally is provided to rotate the outer mould parts (4, 4').

3. Stack mould according to claim 1 or 2, **characterised in that** a die-side stripping plate (3) of the central mould part (1) is provided for demoulding the injection-moulded parts.

4. Stack mould according to claim 1 or 2, **characterised in that** stripper plates (3) of the outer mould parts (4, 4') are provided for demoulding the injection-moulded parts.

5. Stack mould according to any one of the preceding claims, **characterised in that** more than three mould parts (1, 4, 4') are arranged one behind the other.

## Revendications

1. Moule à étages pour mouler par injection des pièces en matière plastique, comprenant
- une partie de moule centrale (1) et
- deux parties de moule extérieures (4, 4') adjacentes à cette dernière et pouvant tourner chacune autour d'un axe de rotation (A) parallèle à la direction de déplacement,
sachant que les parties de moule (4, 4') peuvent être déplacées l'une vers l'autre et éloignées l'une de l'autre, et qu'entre la partie de moule centrale (1) et les deux parties de moule extérieures (4, 4'), les cavités (2) sont réalisées dans les plans de séparation respectifs, **caractérisé en ce que** les parties de moule extérieures (4, 4') sont chacune composées d'une partie de base (5) non rotative pouvant coulisser sur des barres de guidage (8) et d'une partie rotative (6) pouvant tourner par rapport à la précédente, et **en ce que** les deux parties rotatives des parties de moule extérieures (4, 4') peuvent tourner de manière synchrone.

2. Moule à étages selon la revendication précédente, **caractérisé en ce qu'**un mécanisme à roue dentée (7) agissant sur l'extérieur des parties de moule extérieures (4, 4') est prévu pour faire tourner ces dernières.

3. Moule à étages selon la revendication 1 ou 2, **caractérisé en ce qu'**une plaque d'éjection (3) de la partie de moule centrale (1) située du côté de la buse est prévue pour démouler les pièces moulées par injection brutes.

4. Moule à étages selon la revendication 1 ou 2, **caractérisé en ce que** des plaques d'éjection (3) des parties de moule extérieures (4, 4') sont prévues pour démouler les pièces moulées par injection brutes.

5. Moule à étages selon l'une des revendications précédentes, **caractérisé en ce que** plus de trois parties de moule (1, 4, 4') sont disposées l'une derrière l'autre.
